# EUROPÄISCHE PATENTANMELDUNG

(11) **EP 4 703 820 A1**
(43) Veröffentlichungstag der Anmeldung: **04.03.2026**
(21) Anmeldenummer: 24197326.2
(22) Anmeldetag: 29.08.2024
(51) Int. Cl.: G05B 19/4065

(54) **CONDITION MONITORING FÜR WERKZEUGMASCHINEN WÄHREND DES LAUFENDEN BETRIEBS**

(71) Anmelder: Siemens Aktiengesellschaft, 80333 München (DE)
(72) Erfinder: Bretschneider, Jochen, 88696 Owingen (DE); Rost, Philipp, 90768 Fürth (DE); Schäfers, Elmar, 90763 Fürth (DE); Schür, Torsten, 91058 Erlangen (DE)
(74) Vertreter: Siemens Patent Attorneys

(57) **Zusammenfassung**

Die Erfindung betrifft ein Verfahren zum Betrieb einer mit einer numerischen Steuereinrichtung (3) verbundenen Maschine (2), wobei ein definierter Zustand, in dem sich die Maschine (2) befinden kann, definiert wird, wobei wenigstens ein Steuerungs- u/o Maschinendatum, das in dem definierten Zustand erfasst werden soll, festgelegt wird, wobei der definierte Zustand während des Betriebs der Maschine erkannt wird, wobei das festgelegte Steuerungs- u/o Maschinendatum in dem definierten Zustand erfasst wird und wobei wenigstens eine Kenngröße der mit der numerischen Steuereinrichtung (3) verbundenen Maschine (2) in Abhängigkeit des erfassten Steuerungs- u/o Maschinendatums bestimmt wird.

Es soll ein Condition Monitoring in einer Art und Weise durchzuführen, die die Produktivität der Maschine (2) nicht verschlechtert.

Hierzu ist vorgesehen, dass der definierte Zustand derart definiert ist, dass sich die Maschine (2) während einer Herstellung, Be- und/oder Verarbeitung eines Werkstücks (16) mittels der Maschine (2) in dem definierten Zustand befinden kann und der definierte Zustand während eines laufenden Betriebs der Maschine (2) erkannt wird.

## Beschreibung

Die Erfindung betrifft ein Verfahren zum Betrieb einer mit einer numerischen Steuereinrichtung verbundenen Maschine, wobei ein definierter Zustand, in dem sich die Maschine befinden kann, definiert wird, wobei wenigstens ein Steuerungs- u/o Maschinendatum, das in dem definierten Zustand erfasst werden soll, festgelegt wird, wobei der definierte Zustand während des Betriebs der Maschine erkannt wird, wobei das festgelegte Steuerungs- u/o Maschinendatum in dem definierten Zustand erfasst wird und wobei wenigstens eine Kenngröße der mit der numerischen Steuereinrichtung verbundenen Maschine in Abhängigkeit des erfassten Steuerungs- u/o Maschinendatums bestimmt wird.

Ferner betrifft die Erfindung eine numerische Steuereinrichtung zur Durchführung eines derartigen Verfahrens.

Condition Monitoring bei Werkzeugmaschinen verfolgt vorrangig das Ziel, eine schleichende Veränderung, insbesondere Verschlechterung der Übertragungseigenschaften der Vorschubantriebe sowie der Hauptspindel, aber auch Verschlechterungen der Antriebe von Maschinenaggregaten rechtzeitig vor einem Ausfall zu erkennen. Durch die frühzeitige Erkennung wird es möglich, dass der Anwender notwendige Ersatzteile beschaffen und einbauen kann bzw. einen Reparaturservice beauftragen kann. Ein weiterer Vorteil des Condition Monitoring liegt darin, dass durch die frühzeitige Erkennung einer graduellen Verschlechterung die Reparatur in einen Zeitraum gelegt werden kann, in dem keine Produktion stattfindet, beispielsweise in eine dafür vorgesehene Wartungs- bzw. Inspektionsschicht.

Condition Monitoring setzt dabei sowohl auf die Messwerte von zusätzlich in die Maschine eingebauter Sensoren wie Beschleunigungsaufnehmern oder alternativ auf die Erfassung und Verarbeitung von Steuerungs- u/o Maschinendaten, also steuerungs- bzw. antriebsinterner Daten. Auch Mischformen sind bekannt, bei denen sowohl Sensordaten als auch steuerungsinterne Daten erfasst und gemeinsam verarbeitet werden.

Im Zusammenhang mit numerischen Steuereinrichtungen für Werkzeugmaschinen ist bekannt, dass steuerungs- und antriebsinterne Daten "hochfrequent", das heißt z.B. in einem Interpolationstakt der numerischen Steuereinrichtung oder einem Arbeitstakt der Antriebseinheit, aufgezeichnet und verarbeitet werden. Die Datenaufnahme erfolgt dabei während auf der numerischen Steuereinrichtung ein speziell für das Condition Monitoring entworfenes Testprogramm abläuft, welches die Maschinenachsen auf eine gewünschte Art und Weise bewegt. Das Testprogramm wird in Luft abgefahren, ohne eine Belastung oder Bearbeitung durch die Hauptspindel. Das Testprogramm versetzt die Maschinenachsen in gewünschte Zustände, wie beispielsweise:
- Fahrt mit konstanter Geschwindigkeit auf unterschiedlichen Geschwindigkeitsniveaus,
- Fahrt mit sehr niedriger konstanter Geschwindigkeit (um eine hohe Ortsauflösung zu erreichen),
- Fahrt entlang einer Kreisbahn (Kreisformtest)
- Fahrt mit Positions-Microsteps,
- Fahrt mit definierten Beschleunigungsvorgängen.

Aus den Testfahrten lassen sich Eigenschaften der mechanischen Übertragungselemente der Vorschubachsen in Form von Kenndaten ermitteln und mit früher erfassten Kenndaten vergleichen, wie beispielsweise:
- Reibkennlinie,
- Frequenzsignaturen,
- Kreisabweichung und Quadrantenfehler,
- Umkehrspiel (Lose),
- Steifigkeit des Antriebsstranges.

Bei einer aus der EP 3 176 657 A1 bekannten Maschine, insbesondere einer Werkzeug- oder Produktionsmaschine, wird die Steifigkeit eines Antriebsstranges zur linearen Bewegung einer Maschinenkomponente entlang einer Linearführung der Maschine ermittelt. Dabei umfasst der Antriebsstrang einen Motor mit einem Motormesssystem und der Linearführung ist ein Längenmesssystem zur Bestimmung der Position der Maschinenkomponente zugeordnet, wobei die Maschine ferner eine numerische Steuereinrichtung zur Regelung der Bewegung der Maschinenkomponente umfasst. Die Steifigkeit des Antriebsstranges wird bestimmt, indem der Maschinenkomponente eine konstante Beschleunigung mittels der numerischen Steuereinrichtung vorgegeben wird, eine Differenz zwischen einer aus dem Motormesssystem abgeleiteten Position der Maschinenkomponente und einer zeitgleich durch das Längenmesssystem gemessenen Position der Maschinenkomponente während der Beschleunigungsphase mittels der numerischen Steuereinrichtung bestimmt wird und die Differenz zu der Beschleunigung oder einer für die Beschleunigung erforderlichen Kraft zugeordnet wird und das so ermittelten Wertepaar und/oder ein aus dem Wertepaar hervorgehender Steifigkeitswert in der numerischen Steuereinrichtung gespeichert wird. Bei dieser Vorgehensweise werden zur Bestimmung der Steifigkeit des Antriebsstranges nur ohnehin bei der betreffenden Maschine vorhandene Komponenten verwendet und keine zusätzliche Messausrüstung benötigt.

Nachteilig ist es, dass für die Datenaufnahme wenigstens ein spezielles Testprogramm bereitgestellt und von dem Anwender an der Maschine explizit gestartet werden muss. Hier besteht die Gefahr, dass das Testprogramm - zugunsten der produktiven Nutzung der Maschine - nicht regelmäßig ausgeführt wird.

Weiterhin nachteilig ist es, dass das Abspielen des Testprogramms für das Condition Monitoring die produktive Nutzung der Maschine unterbricht.

Der Erfindung liegt daher die Aufgabe zugrunde, das Condition Monitoring in einer Art und Weise durchzuführen, die die Produktivität der Maschine nicht verschlechtert.

Diese Aufgabe wird durch ein Verfahren mit den in Patentanspruch 1 angegebenen Verfahrensschritten gelöst, also ein Verfahren zum Betrieb einer mit einer numerischen Steuereinrichtung verbundenen Maschine mit folgenden Schritten:
- Definieren wenigstens eines definierten Zustandes, in dem sich die Maschine während einer Herstellung, Be- und/oder Verarbeitung eines Werkstücks mittels der Maschine befinden kann;
- Festlegen wenigstens eines Steuerungs- und/oder Maschinendatums, das in dem definierten Zustand erfasst wird;
- Erkennen des definierten Zustandes während eines laufenden Betriebs der Maschine;
- Erfassen des festgelegten Steuerungs- und/oder Maschinendatums in dem definierten Zustand;
- Bestimmen wenigstens einer Kenngröße der mit der numerischen Steuereinrichtung verbundenen Maschine in Abhängigkeit des erfassten Steuerungs- und/oder Maschinendatums;
- Auswerten der bestimmten Kenngröße;
- Agieren in Abhängigkeit eines Ergebnisses der Auswertung.

Bei dem vorgeschlagenen Verfahren findet ein Condition Monitoring im laufenden, regulären Betrieb der Maschine statt, ohne dass hierfür ein spezielles Test-Teileprogramm erforderlich ist. Der reguläre Betrieb der Maschine zur Herstellung, Be- und/oder Verarbeitung eines Werkstücks gemäß einem Teileprogramm, das von der numerischen Steuereinrichtung abgearbeitet wird, muss daher nicht zum Zweck des Condition Monitoring unterbrochen werden und die Produktivität der betreffenden Maschine bleibt dadurch hoch.

In einem ersten Schritt des erfindungsgemäßen Verfahrens wird wenigstens ein Zustand definiert, in dem sich die Maschine während einer Herstellung, einer Bearbeitung oder einer Verarbeitung eines Werkstücks mittels der Maschine befinden kann und der für das Condition Monitoring geeignet ist. In der Regel werden mehrere unterschiedliche Zustände definiert, um mehrere unterschiedliche Kenngrößen zu bestimmen und sich damit einen besseren Überblick über den Zustand der Maschine verschaffen zu können.

Statt die Daten während des dedizierten Testlaufs zu erfassen, werden die Daten erfindungsgemäß im laufenden, regulären Betrieb der Maschine, also während der Abarbeitung eines Teileprogramms zur Herstellung, Be- und/oder Verarbeitung des Werkstücks, erfasst. Dies geschieht dann, wenn sich die Maschine in dem "definierten Zustand" befindet.

Definierte Zustände einer Vorschubachse oder der Hauptspindel oder eines Antriebs eines Maschinenaggregates können beispielsweise sein:
- Fahrt mit konstanter Geschwindigkeit, ohne Bearbeitung durch die Hauptspindel,
- Fahrt mit konstanter Geschwindigkeit, mit Bearbeitung durch die Hauptspindel,
- Fahrt mit konstanter Beschleunigung, ohne Bearbeitung durch die Hauptspindel,
- Fahrt mit konstanter Beschleunigung, mit Bearbeitung durch die Hauptspindel,
- Fahrt mit sinusförmiger Geschwindigkeit, "Kreis", ohne Bearbeitung durch die Hauptspindel,
- Fahrt mit sinusförmiger Geschwindigkeit (Fahrt im Kreis oder entlang eines Kreisbogens), mit Bearbeitung durch die Hauptspindel,
- Fahrt mit kleinen Positionssprüngen,
- Reversierbewegungen (Richtungsumkehr) einer Achse.

Viele der aufgezählten Zustände betreffen die Geschwindigkeit oder die Beschleunigung, mit der sich eine Komponente der Maschine bewegt. Dies kann ein bestimmter (konstanter) Wert der betreffenden Größe (Geschwindigkeit oder Beschleunigung) sein, aber auch ein bestimmter Verlauf der jeweiligen Größe (z.B. ein bestimmter Geschwindigkeitsverlauf beginnend bei Null bis zum Erreichen eines bestimmten Maximalwerts (Losfahrbewegung aus dem Stillstand), ein Geschwindigkeitsverlauf beginnend bei einer bestimmten Geschwindigkeit und Verzögerung bis zum Stillstand (Verzögerungsbewegung in einen Stillstand), ein sinusförmiger Geschwindigkeitsverlauf etc).

Die Aufzählung oben ist nicht abschließend und es gibt eine Vielzahl weiterer definier- und erkennbarer Zustände, die Aufschluss über den Zustand der Maschine bzw. von Komponenten der Maschine geben können.

Viele dieser Zustände lassen sich direkt anhand des Teileprogramms erkennen, das von der numerischen Steuereinrichtung ausgeführt wird. So lässt z.B. ein G0- Befehl erkennen, dass es sich bei der ausgeführten Bewegung um einen Eilgang handelt, bei dem keine Bearbeitung eines Werkstücks stattfindet. Ebenso verhält es sich mit Befehlen für eine geradlinige Bewegung (z.B. G1-Befehl), Befehlen für eine Kreisbahn, Befehlen für eine Bewegung mit konstanter Geschwindigkeit, Befehlen für eine Bewegung mit konstanter Beschleunigung etc.

Alternativ oder in Kombination mit der Erkennung des aktuellen Zustandes anhand des Teileprogramms und der darin enthaltenen Sätze bzw. Befehle zur Steuerung der Maschine kann der aktuelle Zustand, in dem sich die Maschine befindet (Werkstück-Bearbeitung, Nebenbewegung, Werkzeug-Wechsel, Bewegung mit konstanter Geschwindigkeit, beschleunigte Bewegung, ...), auch anhand von Sensorsignalen ermittelt werden. Beispielsweise kann mittels eines Beschleunigungssensors an der Werkzeugaufnahme ermittelt werden, ob das Werkzeug mit konstanter Geschwindigkeit oder beschleunigt bewegt wird und ggf. der Wert der Beschleunigung erfasst werden.

Die Erkennung definierter Zustände kann demnach auf Basis von Programmangaben im Teileprogramm, auf Basis steuerungsinterner Daten, auf Basis von Messwerten, die insbesondere mittels externer Messmittel gewonnen werden, oder aus Mischformen daraus erfolgen.

Sind bestimmte, für den Anwender interessante Zustände definiert, so folgt die Festlegung wenigstens eines Steuerungs- und/oder Maschinendatums, das in dem definierten Zustand erfasst werden soll. Beispiele hierfür sind: eine Stromaufnahme oder ein erzeugtes Drehmoment eines Antriebs, eine Position oder Positionsabweichung (Regeldifferenz) bei der Positionierung einer Achse, eine Winkelstellung oder -abweichung eines Antriebs oder ein Winkel zwischen Komponenten der Maschine, z.B. zwischen Achsschenkeln, eine Drehzahl oder eine Drehzahl-Abweichung eines Antriebs usw. Die Wahl des Steuerungs- und/oder Maschinendatums in dem jeweiligen Zustand hängt insbesondere von der Kenngröße der Maschine ab, die bestimmt bzw. analysiert werden soll.

Die Definition der Zustände sowie die Festlegung der in dem jeweiligen Zustand zu erfassenden Steuerungs- und/oder Maschinendaten kann durch den Hersteller der numerischen Steuereinrichtung, den Hersteller der damit verbundenen Maschine (OEM - Original Equipment Manufacturer bzw. Erstausrüster), einem Betreiber der Maschine oder einem Bediener an der Maschine vorgenommen werden. Bei einer Vorgabe direkt an der Maschine werden vorteilhaft an einem Display der numerischen Steuereinrichtung entsprechende Eingabemasken bereitgestellt.

Im laufenden, regulären Betrieb der Maschine, d.h. während der Abarbeitung eines Teileprogramms zur Herstellung, Be- und/oder Verarbeitung des Werkstücks, wird sodann ein zuvor definierter Zustand erkannt und wenigstens ein diesem Zustand zugeordnetes Steuerungs- und/oder Maschinendatum erfasst. Die Datenerfassung kann insbesondere einmalig, in definierten zeitlichen Abständen oder über einen bestimmten Zeitraum kontinuierlich erfolgen.

Anhand der erfassten Steuerungs- und/oder Maschinendaten wird eine Kenngröße der Maschine bestimmt, z.B. die Reibung einer Achse. Durch eine Vielzahl derartiger Messungen, insbesondere bei unterschiedlichen Geschwindigkeiten und unterschiedlichen Auslenkungen der Achse, kann daraus sogar eine Reibkennlinie bestimmt werden.

Die Fahrten in den "definierten Zuständen" erlauben die direkte Bestimmung von Kenngrößen anhand der erfassten Steuerungs- und/oder Maschinendaten der Maschine oder reichern die Datenbasis zur Bestimmung einer Kenngröße an, z.B. viskose Reibung aus mehreren Fahrten bei verschiedenen Geschwindigkeiten.

Das Erfassen der Steuerungs- und/oder Maschinendaten und die Ermittlung der Kenngröße in Abhängigkeit der erfassten Steuerungs- und/oder Maschinendaten kann z.B. dadurch erfolgen, dass die Steuerungs- und/oder Maschinendaten über einen bestimmten Zeitraum erfasst und aufgezeichnet werden und die Kenngröße anhand der aufgezeichneten Steuerungs- und/oder Maschinendaten ermittelt wird.

Die Bestimmung der Kenngröße kann jedoch auch kontinuierlich unter Berücksichtigung aktueller Steuerungs- und/oder Maschinendaten während des laufenden Betriebs der Maschine erfolgen, z.B. im Interpolationstakt der numerischen Steuereinrichtung.

Das erfindungsgemäße Verfahren zum Betrieb einer mit einer numerischen Steuereinrichtung verbundenen Maschine geht über ein reines Condition Monitoring hinaus, indem die ermittelte Kenngröße ausgewertet (evaluiert) wird und in Abhängigkeit des Ergebnisses der Auswertung eine Aktion bzw. Reaktion erfolgt. Die Aktion richtet sich vor allem danach, ob die ermittelte Kenngröße in dem betreffenden Zustand der Maschine einen erwarteten Wert einnimmt oder davon abweicht. Insbesondere erfolgt bei der Auswertung der Kenngröße ein Vergleich mit Referenzwerten oder bei einer Betrachtung der Kenngröße über einen bestimmten Zeitraum die Ermittlung der Maxima und/oder Minima in diesem Zeitraum und deren Vergleich mit bestimmten Vorgaben. Vorteilhaft können insbesondere bei der Evaluierung der Kenngröße auch Mittel einer künstlichen Intelligenz (Kl bzw. Al) mit einbezogen werden. Dies ist insbesondere dann von Vorteil, wenn in die Kenngröße eine große Anzahl an Messwerten und/oder Messwerte von einer Vielzahl an Sensoren eingehen.

Auf das Ergebnis der Auswertung agiert (reagiert) die Maschine in geeigneter, insbesondere vorbestimmter Weise. Beispielsweise kann bei einer groben Abweichung der Kenngröße von der Norm die Maschine gestoppt und ein Alarm ausgelöst werden. Befindet sich der Wert der Kenngröße hingegen in einem "üblichen" Bereich, so kann die Aktion auch darin bestehen, dass der Wert lediglich in einem Datenspeicher - vorzugsweise mit Zeitstempel - hinterlegt und ggf. an einem Display angezeigt wird. Zwischen diesen genannten Extremen besteht eine Vielzahl an möglichen Aktionen, die mittels der numerischen Steuereinrichtung ausgeführt werden können, beispielsweise ein Betrieb der Maschine in Abhängigkeit der ermittelten Kenngröße, die Ausgabe einer Meldung, insbesondere Warnmeldung an einen Benutzer, der Vorschlag eines bestimmten Testlaufs, bei dem die Maschine mit einem für die jeweilige Kenngröße dedizierten Messprogramm gefahren und vermessen wird, usw.

Auch die Festlegung, wie die numerische Steuereinrichtung in Abhängigkeit von der ermittelten Kenngröße agieren soll, kann durch den Hersteller der numerischen Steuereinrichtung, den Hersteller der damit verbundenen Maschine (OEM), einen Betreiber der Maschine oder einen Bediener an der Maschine erfolgen.

Die nachfolgende Tabelle 1 gibt einen Überblick über mögliche definierte Zustände, die Daten, die in dem jeweiligen Zustand erfasst werden, die relevanten Kenngrößen der Maschine ("Relevant für") und die Art der erfassten Daten (Beitrag als Update oder zur direkten Bestimmung der jeweiligen Kenngröße):

**Tabelle 1**

| **Definierter Zustand** | **Aufgezeichnete Daten** | **Relevant für** | **Beitrag** | **Bemerkung** |
|---|---|---|---|---|
| Fahrt einer Achse mit konstanter Geschwindigkeit v1 (ohne Bearb.) | Drehmoment M1 oder drehmomentbildender Strom 11 | Reibkennlinie | Update für einen Punkt (v1 ,M1) der Reibkennlinie | |
| Fahrt einer Achse mit konstanter Geschwindigkeit v2 (mit Bearb.) | Drehmoment M2 oder drehmomentbildender Strom I2 (aller Achsen) Spindelleistung und Spindeldrehmoment | Reibkennlinie | Update für einen Punkt (v1 ,M1) der Reibkennlinie | Korrekturrechnung notwendig, um den Beitrag, der über die Zerspankraft entsteht, herauszurechnen |
| Fahrt einer Achse mit niedriger konstanter Geschwindigkeit v3 (ohne Bearb.) | Positionen von direktem und indirektem Messsystem | Frequenzsignaturen | Update der Frequenzsignaturen (Auflösung abhängig von zeitlicher Länge) | |
| Fahrt einer Achse mit niedriger konstanter Geschwindigkeit v4 (mit Bearb.) | Positionen von direktem und indirektem Messsystem Spindelleistung und Spindeldrehmoment | Frequenzsignaturen | Update der Frequenzsignaturen (Auflösung abhängig von zeitlicher Länge) | Korrekturrechnung notwendig, um den Beitrag, der über die Zerspankraft entsteht, herauszurechnen |
| Fahrt einer Achse mit konstanter Beschleunigung a1 (ohne Bearb.) | Positionen von direktem und indirektem Messsystem | Steifigkeit | Bestimmung der Steifigkeit des Antriebsstranges im örtlichen Bereich des Beschleunigungsvorganges | |
| Fahrt einer Achse mit konstanter Beschleunigung a2 (mit Bearb.) | Positionen von direktem und indirektem Messsystem Spindelleistung und Spindeldrehmoment | Steifigkeit | Bestimmung der Steifigkeit des Antriebsstranges im örtlichen Bereich des Beschleunigungsvorganges | Korrekturrechnung notwendig, um den Beitrag, der über die Zerspankraft entsteht, herauszurechnen |
| Fahrt mit sinusförmiger Bewegung (ohne Bearb.) | Positionen von direktem und indirektem Messsystem | Kreisformabweichung; Quadrantenfehler | Bestimmung der Positionsabweichung von Positions-Sollwerten und /-Istwerten | |
| Fahrt mit sinusförmiger Bewegung (mit Bearb.) | Positionen von direktem und indirektem Messsystem Spindelleistung und Spindeldrehmoment | Kreisformabweichung; Quadrantenfehler | Bestimmung der Positionsabweichung von Positions-Sollwerten und /-Istwerten | Korrekturrechnung notwendig, um den Beitrag, der über die Zerspankraft entsteht, herauszurechnen |
| Reversierbetrieb einer Achse (ohne Bearb.) | Positionen von direktem und indirektem Messsystem | Umkehrspiel | Bestimmung der Positionsabweichung von Positions-Sollwerten und /-Istwerten | |
| Reversierbetrieb | Positionen von direktem | Umkehrspiel | Bestimmung der | Korrekturrechnung |
| einer Achse (mit Bearb.) | und indirektem Messsystem | | Positionsabweichung von Positions-Sollwerten und /-Istwerten | notwendig, um den Beitrag, der über die Zerspankraft entsteht, herauszurechnen |
| Fahrt mit kleinen Positionssprüngen (Microsteps) | Positionen von direktem und indirektem Messsystem | Sensibilität | Bestimmung der Zeitdauer (Zeitkonstante) mit der ein Microstep abgearbeitet wird | |

Die aufgezeigte Tabelle 1 zeigt lediglich eine Auswahl an Möglichkeiten und ist nicht abschließend.

Zusätzlich zu den in Tabelle 1 genannten Kenngrößen lassen sich demnach weitere Kenngrößen definieren, die aus dem kontinuierlichen, von der numerischen Steuereinrichtung erzeugten Datenstrom ermittelt werden. Sinnvoll ist beispielsweise die Bestimmung der ersten Eigenfrequenz einer Achse, die sich vorteilhaft aus Beschleunigungsbewegungen zum Erreichen eines Eilgang (G0) oder der Verzögerungsbewegung am Ende einer Eilgangbewegung ermitteln lässt. Eine über einen längeren Beobachtungszeitraum kleiner werdende Eigenfrequenz ist ein sicheres Kennzeichen für eine Verschlechterung des Antriebsstrangs.

Eine weitere sinnvolle Kenngröße ist beispielsweise die Bestimmung ortsabhängiger Abweichungen einer Achse im Maschinenraum, z.B. Positions-Abweichungen oder Abweichungen des Antriebsstroms von einem Sollwert. Damit lässt sich z.B. erkennen, dass das Drehmoment eines Antriebs an einer bestimmten Stelle im Arbeitsraum immer ansteigt, etwa weil eine Abdeckung klemmt.

Die Erfassung von Daten einzelner Maschinenachsen in definierten Zuständen kann in gleicher bzw. abgewandelter Weise auch für die bzw. eine Hauptspindel angewandt werden. Beispiele sind die Erfassung von Zuständen konstanter Geschwindigkeit oder Beschleunigung unter Berücksichtigung der Spindellast. Für positionsgeregelte Spindeln können auch spezielle Profile, wie Umdrehung zu Vorschub in Spindelrichtung, erkannt werden. Diese Profile sind spezifisch für unterschiedliche Technologien und in der Regel werkzeugabhängig.

Die definierten Zustände werden an Werkzeugmaschinen beispielsweise erreicht in folgenden Situationen:
- Programmierte G0-Eilgangbewegung einer Achse. Bei G0-Bewegungen findet darüber hinaus bei DIN-gerechter Programmierung keine Bearbeitung statt;
- Programmierte G1-Positionierbewegung einer Achse. Bei G1-Bewegungen kann eine Bearbeitung stattfinden;
- Beschleunigungsvorgänge einer Achse werden in der Regel beim Verfahren aus dem Stillstand heraus durchgeführt oder aber aus einem bestehenden Geschwindigkeitsniveau, wenn eine neue G0 oder G1 Linearverfahrbewegung ansteht;
- Programmierte G2/G3-Kreisbewegungen. Bei G2/G3-Bewegungen kann eine Bearbeitung stattfinden;
- Programmierte Positions-Steps oder -Microsteps mit G0 oder G1 werden typischerweise während einer Bearbeitung ausgeführt;
- Reversierbewegungen/Umkehrbewegungen einer Achse mit G0 oder G1 Bewegungen kommen oftmals im regulären Betrieb der Maschine vor.

Für die Datenaufnahme besteht die Möglichkeit einer getriggerten Datenaufnahme auf eine der genannten Situationen oder aber die kontinuierliche Aufnahme von Daten, insbesondere mit nachträglicher Filterung.

Die Aufnahme von Daten kann auch in unterschiedlichen, bei numerischen Steuereinrichtungen üblichen Betriebsarten wie AUTO, JOG oder MDA erfolgen.

Bei der Aufnahme von Daten in den definierten Zuständen ist zu berücksichtigen, ob sich nur eine Achse oder mehrere Achsen gleichzeitig bewegen. Bewegen sich mehrere Achsen, so müssen Daten aller Achsen aufgezeichnet werden, um Effekte wie bspw. das sogenannte Übersprechen bei der Auswertung korrigieren zu können.

Neben bzw. zusätzlich zur Aufzeichnung von definierten Zuständen bei den Verfahrbewegungen einer Achse lassen sich erfindungsgemäß auch komplette "definierte Bewegungsabläufe" aufzeichnen und für die Zwecke des Condition Monitoring nutzen. Hierfür können auch andere als die bereits genannten Auswertemethoden notwendig sein. Insbesondere können auch hier Mittel einer künstlichen Intelligenz (Kl bzw. Al) sinnvoll eingesetzt werden.

Definierte Bewegungsabläufe sind ähnlich oder gleich ablaufende Bewegungsvorgänge in der Werkzeugmaschine, die aufgrund ihrer Ähnlichkeit gut zum Zweck des Condition Monitoring genutzt werden können, wie beispielsweise:
- Werkzeugwechsel
- Warmlaufprogramme,
- Bearbeitungszyklen, die auf der Steuerung hinterlegt sind wie beispielsweise Bohr-/Dreh-/Fräs-zyklen.

Das beschriebene Vorgehen zur Ermittlung von Kenngrößen im laufenden Betrieb lässt sich auch ergänzend zu einem bestehenden Fingerprint aus einer dedizierten Testfahrt (Ursprungszustand) anwenden. Aus den während des Betriebs anfallenden Daten werden die Kenngrößen wie beschrieben berechnet und bei relevanten Abweichungen zum Ursprungszustand wird eine Aktion, z.B. ein Alarm, ausgelöst.

Eine erfindungsgemäße numerische Steuereinrichtung zur Durchführung eines Verfahrens nach einem der Ansprüche 1 bis 18 umfasst:
- Mittel zum Definieren wenigstens eines definierten Zustandes, in dem sich die Maschine während einer Herstellung, Be- und/oder Verarbeitung eines Werkstücks mittels der Maschine befinden kann, z.B. ein HMI (Human Machine Interface);
- Mittel zum Festlegen wenigstens eines Steuerungs- und/oder Maschinendatums, das in dem definierten Zustand erfasst wird, z.B. ein HMI (Human Machine Interface);
- Mittel zum Erkennen des definierten Zustandes während eines laufenden Betriebs der Maschine, z.B. einen digitalen Signalprozessor und eine Software zum Auswerten von Daten;
- Mittel zum Erfassen des festgelegten Steuerungs- und/oder Maschinendatums in dem definierten Zustand, z.B. einen digitalen Signalprozessor und einen Datenspeicher;
- Mittel zum Bestimmen wenigstens einer Kenngröße der mit der numerischen Steuereinrichtung verbundenen Maschine in Abhängigkeit des erfassten Steuerungs- und/oder Maschinendatums, z.B. einen digitalen Signalprozessor, einen Datenspeicher und eine Software zum Bestimmen der Kenngröße;
- Mittel zum Evaluieren (Auswerten) der bestimmten Kenngröße, z.B. einen digitalen Signalprozessor und eine Software zum Auswerten von Daten;
- Mittel zum Agieren in Abhängigkeit eines Ergebnisses der Auswertung, z.B. einen digitalen Signalprozessor und eine Software zum Anpassen von Parametern und zur Anzeige von Daten.

Die Erfindung wird nachfolgend anhand von Ausführungsbeispielen exemplarisch näher beschrieben und erläutert. Dabei zeigen:
- FIG 1: ein Werkzeugmaschinensystem zur Durchführung eines erfindungsgemäßen Verfahrens,
- FIG 2: mögliche Bewegungsprofile einer Achse, anhand derer Rückschlüsse auf den Zustand der Achse gezogen werden können,
- FIG 3: eine Reibkennlinie,
- FIG 4: eine Gleichlauf-Kennlinie,
- FIG 5: eine Steifigkeits-Kennlinie,
- FIG 6: eine Umkehrspiel-Kennlinie,
- FIG 7: eine Kreisformtest-Kennlinie,
- FIG 8: Verfahrensschritte bei der Durchführung eines erfindungsgemäßen Verfahrens.

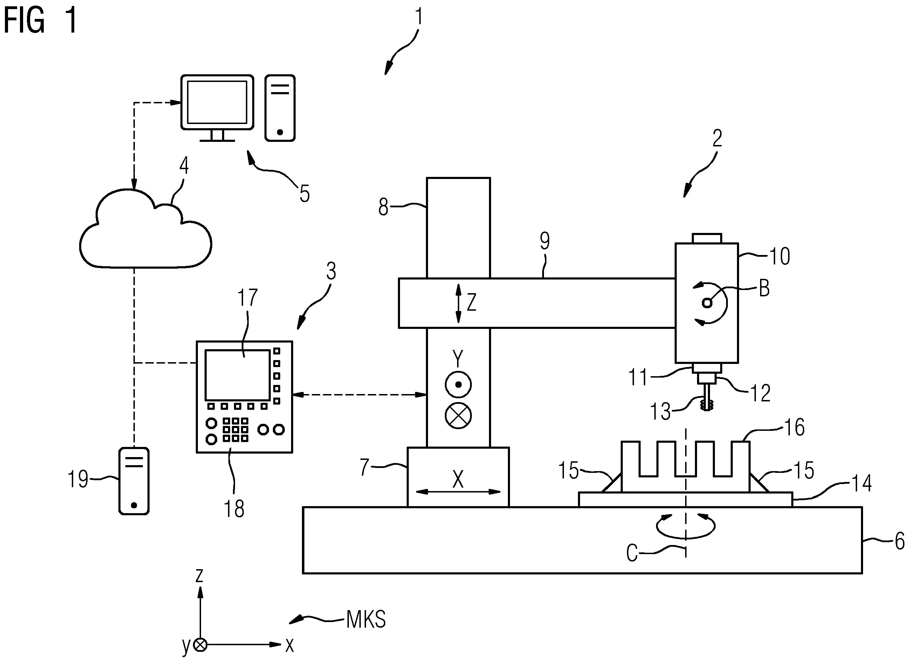

In FIG 1 ist schematisiert ein Maschinensystem in Form eines Werkzeugmaschinensystems 1 dargestellt. Das Werkzeugmaschinensystem 1 umfasst eine Maschine in Form einer Werkzeugmaschine 2. Ferner umfasst das Werkzeugmaschinensystem 1 eine mit der Werkzeugmaschine 2 verbundene numerische Steuereinrichtung in Form einer CNC-Steuerung 3 zur Steuerung der Werkzeugmaschine 2. Weiterhin umfasst das Werkzeugmaschinensystem 1 eine über ein Netzwerk 4, zum Beispiel das Intranet oder Internet, verbundene externe Recheneinrichtung in Form eines CAD/CAM-Systems 5. Darüber hinaus umfasst das Werkzeugmaschinensystem 1 einen industriellen Edge-Computer 19, der sowohl über ein firmeninternes Netzwerk mit der CNC-Steuerung 3 als auch über das Netzwerk 4 (Intranet/Internet) mit dem CAD/CAM-Systems 5 verbunden ist.

Die dargestellte Werkzeugmaschine 2 verfügt über 3 lagegeregelte Linearachsen X, Y und Z, wobei ein erstes Tragelement 7 in x-Richtung, ein zweites Tragelement 8 in y-Richtung und ein drittes Tragelement 9 in z-Richtung bezüglich eines bezüglich der Werkzeugmaschine 2 ortsfesten Maschinenkoordinatensystems MKS verstellbar ist.

Das erste Tragelement 7 ist über einen in x-Richtung verstellbaren Linearantrieb (nicht dargestellt) mit einem ruhenden Maschinengestell 6 verbunden, das zweite Tragelement 8 ist über einen in y-Richtung verstellbaren Linearantrieb (nicht dargestellt) mit dem ersten Tragelement 7 verbunden und das dritte Tragelement 9 ist über einen in z-Richtung verstellbaren Linearantrieb (nicht dargestellt) mit dem zweiten Tragelement 8 verbunden.

Das dritte Tragelement 9 trägt einen Spindelantrieb 10, der seinerseits um eine zur Y-Achse parallele, lagegeregelte Rundachse B schwenkbar ist. Der Spindelantrieb 10 weist seinerseits eine um eine Spindelachse (nicht dargestellt) rotierbare, drehzahl- und/oder lagegeregelte Werkzeugspindel 11 auf, in die ein Werkzeughalter 12 mit dem daran befestigten Werkzeug 13 eingespannt ist.

Weiterhin umfasst die Werkzeugmaschine 2 eine um eine parallel zur Z-Achse ausgerichtete, lagegeregelte Werkzeugtischachse C, um die ein Werkstücktisch 14 rotierbar ist.

Der Werkzeugtisch 14 ist ebenfalls mit dem ruhenden Maschinengestell 6 verbunden und an dem Werkzeugtisch 14 ist mittels der Werkzeughalter 15 ein Werkstück 16 befestigt.

Die Werkzeugmaschine 2 verfügt im Rahmen des Ausführungsbeispiels demnach über fünf lagegeregelte Maschinenachsen, durch die eine Relativbewegung zwischen dem Werkzeug 13, das im Rahmen des Ausführungsbeispiels in Form eines Fräsers vorliegt, und dem Werkstück 16 durchgeführt werden kann. Es handelt sich somit um eine sogenannte 5-achsige Werkzeugmaschine (5-Achs-Maschine), wobei an dieser Stelle angemerkt sei, dass eine Werkzeugmaschine selbstverständlich auch noch mehr, aber auch weniger als fünf Maschinenachsen aufweisen kann. Die Antriebe der lagegeregelten Maschinenachsen wurden wegen der besseren Übersichtlichkeit im Ausführungsbeispiel nicht dargestellt.

Die Werkzeugmaschine 2 ist mit der CNC-Steuerung 3 verbunden, die anhand eines Teileprogramms und/oder einer Handbedieneingabe Bewegungssollwerte für die Maschinenachsen zur Steuerung einer zwischen dem Werkzeug 13 und dem Werkstück 16 stattfindenden Relativbewegung ermittelt. Die CNC-Steuerung 3 ermittelt die Bewegungssollwerte insbesondere anhand des Teileprogramms, in dem die von dem Werkzeug 13 relativ zu dem Werkstück 16 durchzuführenden Bewegungen in Form von Befehlen bzw. Programmanweisungen, in der Regel in Form von G-Code, definiert sind.

Alternativ oder zusätzlich kann die Bewegung des Werkzeugs 13 und/oder das Werkstücks 16 auch mittels einer Handbedieneingabe über eine Bedieneinrichtung mit Bedienelementen 18 in Verbindung mit einer Anzeigevorrichtung in Form eines Displays 17 der CNC-Steuerung 3 von einem Bediener vor Ort an der Werkzeugmaschine 2 vorgegeben werden. Die Bedienelemente 18 umfassen insbesondere Taster, oder Drehregler. Vorteilhaft kann das Display 17 auch als Touchscreen und damit ebenfalls als Bedienelement ausgeführt sein.

Das Teileprogramm wird üblicherweise in einer aus Sicht der CNC-Steuerung externen Recheneinrichtung, im Ausführungsbeispiel dem CAD/CAM-System 5 und einem eventuell dem CAD/CAM-System nachgeschalteten sogenannten Postprozessor (nicht dargestellt) außerhalb der CNC-Steuerung 3 erzeugt und von dort, insbesondere über das Netzwerk 4, auf die CNC-Steuerung 3 übertragen.

Bei der Abarbeitung des Teileprogramms erzeugt die CNC-Steuerung 3 in einem bestimmten Takt, dem Interpolationstakt, Lagesollwerte x, y und z für die Linearachsen sowie Winkellagesollwerte β und γ (nicht dargestellt) für die Rundachsen B und C. Durch diese Bewegungssollwerte wird das Werkzeug 13 mit vorgegebener Orientierung relativ zu dem Werkstück 16 entlang einer Bewegungsbahn (Bahn) bewegt.

Neben den reinen Lagesollwerten sind mittels der CNC-Steuerung 3 auch die Dynamik der Relativbewegung bzw. der einzelnen Achsen betreffende Größen, insbesondere die Geschwindigkeit, die Beschleunigung oder der Ruck, ermittelbar bzw. einstellbar.

Wie oben bereits beschrieben wurde, wird das Teileprogramm zur Bearbeitung des Werkstücks 16 in der Regel aus einem CAD-File abgeleitet. Durch das CAD-File ist das Werkstück 16 exakt beschrieben, insbesondere hinsichtlich seiner Abmessungen und Merkmale (Features). Das Teileprogramm wiederum enthält exakt die Bewegungsangaben zur Bewegung des Werkzeugs 13 bzw. der Werkzeuge relativ zu dem Werkstück 16 zum Erzeugen der gewünschten Merkmale des Werkstücks 16.

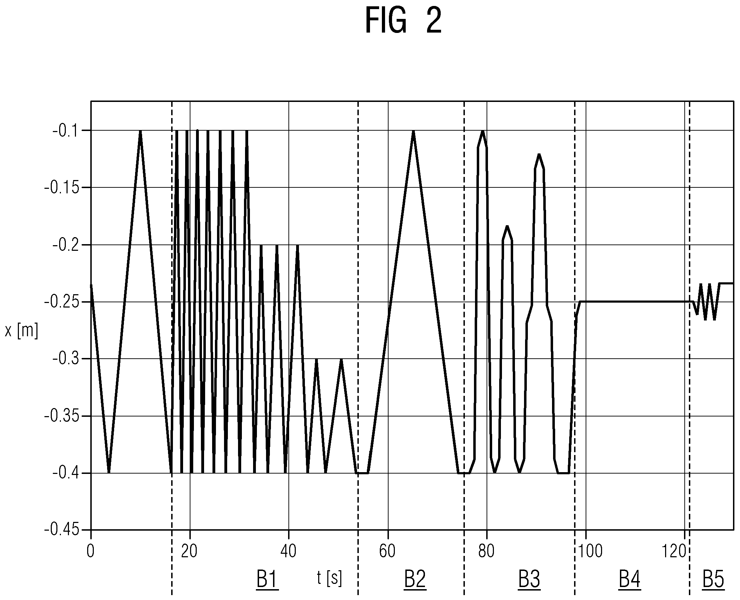

FIG 2 zeigt mögliche Bewegungsprofile einer Achse, anhand derer Rückschlüsse auf den Zustand der Achse gezogen werden können. Dabei zeigt die Figur lediglich einige wenige mögliche Bewegungsprofile der Achse, anhand derer bestimmte Kenngrößen der Achse ermittelt werden können. Daneben ist eine Vielzahl weiterer Bewegungsprofile denkbar.

Weiterhin sind in FIG 2 zur besseren Veranschaulichung und Unterscheidbarkeit die verschiedenen Bewegungsprofile direkt aneinandergereiht dargestellt. Dies entspricht jedoch nicht der realen, praktischen Vorgehensweise bei der Ermittlung der gesuchten Kenngrößen. Vielmehr sind in der Praxis die einzelnen Tests (soll heißen die unterschiedlichen Bewegungsprofile) zeitlich voneinander getrennt. Insbesondere werden die einzelnen Tests in der Regel mehrfach wiederholt (ggf. mit unterschiedlichen Parametern) und nacheinander für mehrere (Maschinen-) Achsen durchgeführt, bis ggf. zu einem weiteren, von dem vorherigen Test verschiedenen Test übergegangen wird.

Die in FIG 2 skizzierten Tests können gezielt mittels der CNC-Steuerung durch entsprechende Testabläufe (Messfahrten) vorgegeben und ausgeführt werden. Gemäß der Erfindung erkennt die CNC-Steuerung jedoch entsprechende Bewegungsmuster (-profile) während der regulären Werkstück-Bearbeitung, also der Abarbeitung eines Teileprogramms. Gezielte Messfahrten sind daher nicht erforderlich.

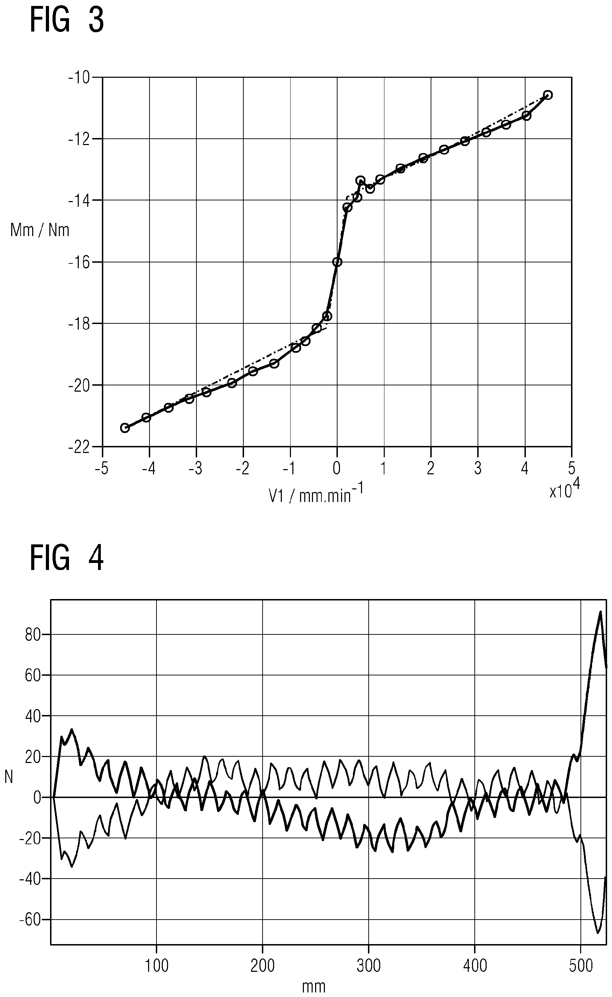

Im Zeitabschnitt B1 aus FIG 2 sind (Mess-) Fahrten mit verschiedenen Sätzen konstanter Geschwindigkeit dargestellt. Gemessen werden das Drehmoment bzw. die Kraft, die erforderlich ist, um die Achsenreibung zu überwinden und die vorgesehene Bewegung zu ermöglichen. FIG 3 zeigt ein Beispiel einer Reibkennlinie, die aus entsprechenden Bewegungsprofilen resultiert.

Im Zeitabschnitt B2 aus FIG 2 wird eine Achse mit konstanter Geschwindigkeit über einen definierten Messweg vollständig bewegt. Dabei wird das Motordrehmoment gemessen. Das gemessene Motordrehmoment wird gegen den Verfahrweg aufgetragen, was in FIG 4 in Form einer Gleichlauf-Kennlinie veranschaulicht ist. Entscheidend dabei ist die resultierende und gemessene Maximalkraft und die Varianz während der Hin- bzw. Rückfahrt. Dadurch lassen sich Gleichlauf-Eigenschaften der Achse bestimmen.

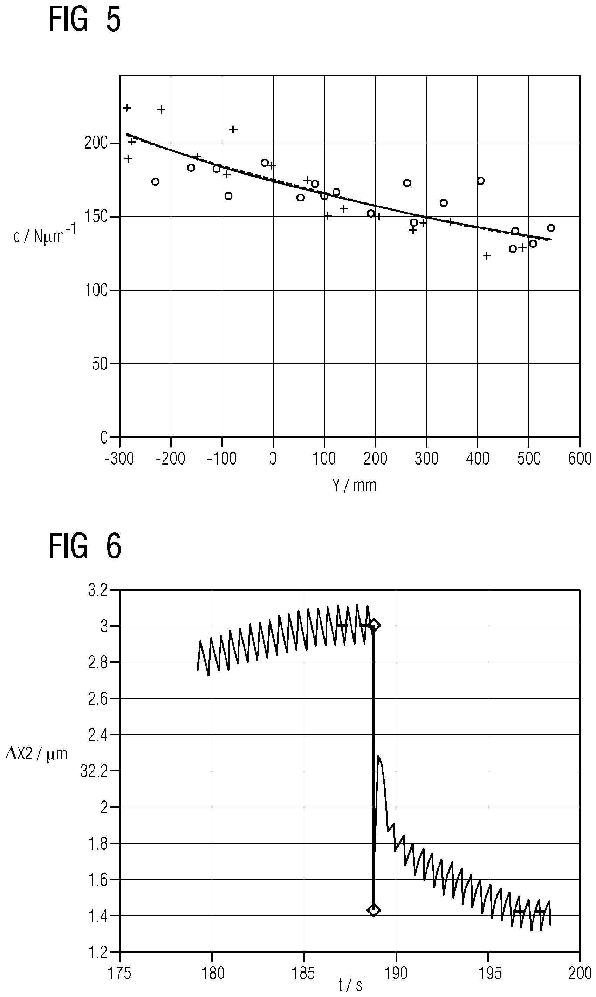

Der Zeitabschnitt B3 aus FIG 2 zeigt eine Beschleunigung einer Achse an verschiedenen Positionen. Die einzelnen diskreten Messpunkte werden dann mittels Polynombeschreibung zu einer Steifigkeits-Kennlinie miteinander verbunden. Eine entsprechende Steifigkeits-Kennlinie zeigt FIG 5.

Der Zeitabschnitt B4 aus FIG 2 zeigt die Ermittlung des Umkehrspiels einer Achse durch die Bestimmung der Differenz von Motor- und Direktgeber-Lagewerten nach Positionierungen mit sehr kleinen Schritten zur Vermeidung von Dynamik und damit Kompression des Antriebsstranges. Die Differenz der beiden Gebersignale nach einer Richtungsänderung stellt das Umkehrspiel dar. Eine entsprechende Umkehrspiel-Kennlinie ist in FIG 6 veranschaulicht. Die betrachteten Verfahrbewegungen im Bereich der Richtungsänderung sind dabei so klein, dass sie bei dem gewählten Maßstab aus FIG 2, Abschnitt B4, nicht direkt ersichtlich sind.

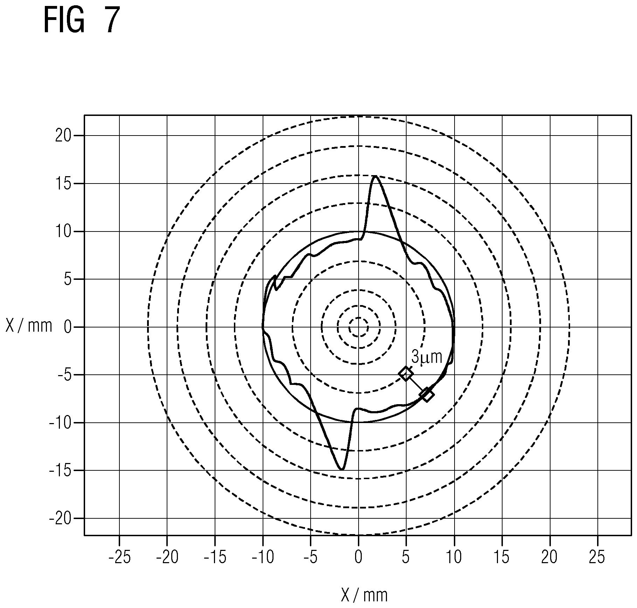

Das in dem Zeitabschnitt B5 aus FIG 2 ersichtliche Bewegungsprofil zeigt eine sinusförmige Bewegung einer Achse ohne Wechselwirkung mit einer zweiten Achse. Ermittelt wird die Abweichung einer Istposition von der Sollposition. Der Quadrantenfehler tritt auf, wenn die Bewegungsrichtung der Achse umgekehrt wird und ist hauptsächlich auf die Haftreibungseffekte der Achse zurückzuführen. Das Diagramm für den Quadrantenfehler kann als zweidimensionales Kreisformdiagramm mit einer idealen Gegenachse dargestellt werden, da ein solches (2-dimensionales) Diagramm üblicherweise zur Darstellung dieser Effekte verwendet wird und die entsprechende Darstellung dem Fachmann daher geläufig ist. FIG 7 veranschaulicht eine derartige "Kreisformtest-Kennlinie" für eine Achse.

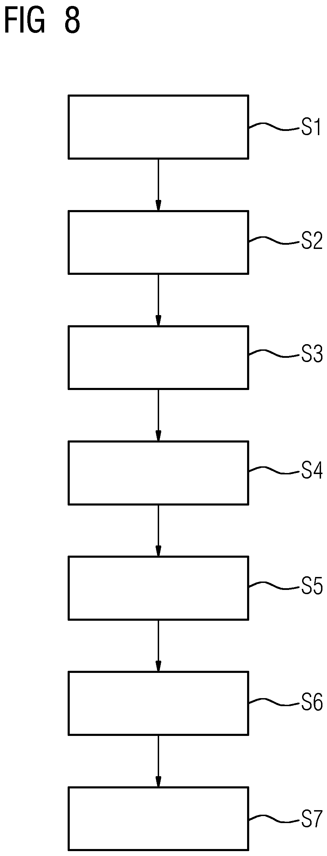

Nachfolgend werden die wesentlichen Verfahrensschritte bei der Durchführung eines erfindungsgemäßen Verfahrens in Form eines Ablaufdiagramms gemäß FIG 8 verdeutlicht, wobei hierbei auf die vorherige Figur 1 Bezug genommen wird.

In einem ersten Verfahrensschritt S1 werden in der CNC-Steuerung 3 Zustände definiert bzw. hinterlegt, die die Maschine 2 während der Bearbeitung des Werkstücks 16 gemäß dem vorliegenden Teileprogramm einnehmen kann, beispielsweise "geradlinige Bewegung des in Eingriff befindlichen Werkzeugs 13 mit konstanter Geschwindigkeit". Die CNC-Steuerung 3 erkennt den jeweiligen Zustand entweder direkt aus den Sätzen (G-Code-Anweisungen) des Teileprogramms während dessen Ausführung und/oder anhand von Sensordaten, z.B. den Lage- oder Geschwindigkeitsdaten einzelner Achsen.

In der CNC-Steuerung 3 wird weiterhin in einem zweiten Verfahrensschritt S2 hinterlegt, welches Steuerungs- und/oder Maschinendatum bzw. welche Steuerungs- und/oder Maschinendaten während eines bestimmten Zustandes ermittelt und insbesondere aufgezeichnet werden soll bzw. sollen.

Wird nun während der Bearbeitung eines Werkstücks 16 in einem dritten Verfahrensschritt S3 von der CNC-Steuerung 3 ein definierter Zustand erkannt, so werden in einem vierten Verfahrensschritt S4 die dem Zustand zugeordneten Steuerungs- und/oder Maschinendaten, z.B. Achspositionen, Achsgeschwindigkeiten, Stromaufnahme der Antriebe etc. erfasst, insbesondere aufgezeichnet. Bei den erfassten Daten kann es sich sowohl um ohnehin in der CNC-Steuerung 3 vorhandene Daten (Lagesollwerte, Stromsollwerte, ...) als auch mittels externer Messmittel (Sensoren) erzeugte Daten (Temperatur, Vibrationen etc.) handeln.

Aus den erfassten Steuerungs- und/oder Maschinendaten werden anhand dem Fachmann bekannter Zusammenhänge in einem Verfahrensschritt S5 Kenngrößen der Maschine bestimmt, z.B. hinsichtlich der Reibung, des Gleichlaufs, der Steifigkeit, des Umkehrspiels oder der Positioniergenauigkeit einer Achse.

In einem nachfolgenden Verfahrensschritt S6 erfolgt eine Auswertung bzw. Evaluierung bzw. Analyse der bestimmten Kenngröße bzw. Kenngrößen. Beispielsweise erfolgt ein Vergleich mit den analogen, zu einem früheren Zeitpunkt bestimmten Kenngrößen, aus denen insbesondere eine zeitliche Veränderung einer betreffenden Kenngröße ersichtlich wird, ein Vergleich mit Referenzwerten, z.B. von baugleichen Maschinen, ein Vergleich mit vorgegebenen Minima oder Maxima etc. Erst die Auswertung der Kenngrößen erlaubt eine fundierte Aussage über den tatsächlichen Zustand der Maschine, z.B. das Spiel bzw. die Abnutzung einzelner Achsen.

Vorteilhaft endet das erfindungsgemäße Verfahren nicht mit dem Bestimmen und Auswerten von Kenngrößen (Condition Monitoring), sondern die CNC-Steuerung 3 agiert bzw. reagiert in einem Verfahrensschritt S7 auf das Ergebnis der Auswertung. Hierfür kommt - abhängig von der Art und dem ermittelten Wert der betreffenden Kenngröße - eine Vielzahl an Möglichkeiten in Betracht. Beispiele hierfür sind:
- Die nachfolgende Bearbeitung des Werkstücks wird an die ermittelte Kenngröße angepasst, z.B. eine Vorschubgeschwindigkeit des Werkzeugs 13 reduziert;
- Der ermittelte Wert der Kenngröße wird an dem Display 17 der CNC-Steuerung 3 angezeigt;
- Wenn der ermittelte Wert der Kenngröße einen ersten Schwellenwert übersteigt, wird eine Fehlermeldung an dem Display 17 der CNC-Steuerung 3 angezeigt;
- Wenn der ermittelte Wert der Kenngröße einen zweiten Schwellenwert übersteigt, löst die CNC-Steuerung 3 einen (optischen und/oder akustischen) Alarm aus und stoppt die Bearbeitung des Werkstücks 16.

Die genannten Verfahrensschritte werden bei einer Ausführungsform der Erfindung automatisch, insbesondere rein mittels der CNC-Steuerung 3 ausgeführt.

Bei einer alternativen Ausführungsform umfasst die numerische Steuereinrichtung neben der CNC-Steuerung 3 einen mit der CNC-Steuerung 3 verbundenen industriellen Edge-Computer 19, in den zur Entlastung der CNC-Steuerung 3 bestimmte Verfahrensschritte ganz oder teilweise ausgelagert werden können. Insbesondere die Bestimmung und/oder die Auswertung der Kenngrößen können so auf den Edge-Computer 19 ausgelagert werden.

## Patentansprüche

1. Verfahren zum Betrieb einer mit einer numerischen Steuereinrichtung (3) verbundenen Maschine (2) mit folgenden Schritten:
- Definieren wenigstens eines definierten Zustandes, in dem sich die Maschine (2) während einer Herstellung, Be- und/oder Verarbeitung eines Werkstücks (16) mittels der Maschine (2) befinden kann;
- Festlegen wenigstens eines Steuerungs- und/oder Maschinendatums, das in dem definierten Zustand erfasst wird;
- Erkennen des definierten Zustandes während eines laufenden Betriebs der Maschine (2);
- Erfassen des festgelegten Steuerungs- und/oder Maschinendatums in dem definierten Zustand;
- Bestimmen wenigstens einer Kenngröße der mit der numerischen Steuereinrichtung (3) verbundenen Maschine (2) in Abhängigkeit des erfassten Steuerungs- und/oder Maschinendatums;
- Auswerten der bestimmten Kenngröße;
- Agieren in Abhängigkeit eines Ergebnisses der Auswertung.

2. Verfahren nach Anspruch 1, wobei der definierte Zustand eine Geschwindigkeit oder Beschleunigung betrifft, mit der sich eine Komponente der Maschine (2) bewegt.

3. Verfahren nach einem der Ansprüche 1 oder 2, wobei der definierte Zustand die Form einer Bahn betrifft, entlang der sich die bzw. eine Komponente der Maschine bewegt.

4. Verfahren nach einem der vorherigen Ansprüche, wobei der definierte Zustand eine Richtungsumkehr einer Komponente, insbesondere einer Maschinenachse (X, Y, Z) der Maschine (2) betrifft.

5. Verfahren nach einem der vorherigen Ansprüche, wobei es sich bei der Maschine (2) um eine Werkzeugmaschine (2) handelt, bei der ein Werkzeug (13) relativ zu einem Werkstück (16) bewegt wird und der definierte Zustand dadurch bestimmt ist, dass sich das Werkzeug (13) in Eingriff oder nicht in Eingriff bezüglich des Werkstücks (16) befindet.

6. Verfahren nach einem der vorherigen Ansprüche, wobei das Steuerungs- u/o Maschinendatum eine Kraft oder ein Drehmoment betrifft, die bzw. das auf die oder eine Komponente der Maschine (2) ausgeübt wird.

7. Verfahren nach einem der vorherigen Ansprüche, wobei das Steuerungs- u/o Maschinendatum einen elektrischen Strom betrifft, der einem Antrieb für die oder eine Komponente der Maschine (2) zugeführt wird.

8. Verfahren nach einem der vorherigen Ansprüche, wobei das Steuerungs- u/o Maschinendatum eine Position, einen Winkel oder eine Drehzahl der oder einer Komponente der Maschine (2) betrifft.

9. Verfahren nach einem der vorherigen Ansprüche, wobei das Steuerungs- u/o Maschinendatum steuerungsintern oder mittels einer, insbesondere externen, Messeinrichtung bestimmt wird.

10. Verfahren nach einem der vorherigen Ansprüche, wobei das Steuerungs- u/o Maschinendatum einmalig, in bestimmten zeitlichen Abständen oder, insbesondere innerhalb eines definierten Zeitraums, kontinuierlich bestimmt wird.

11. Verfahren nach einem der vorherigen Ansprüche, wobei die Kenngröße eine Reibung einer Maschinenachse (X, Y, Z) der Maschine (2) betrifft.

12. Verfahren nach einem der vorherigen Ansprüche, wobei die Kenngröße eine Eigenfrequenz der oder einer Komponente der Maschine (2) betrifft.

13. Verfahren nach einem der vorherigen Ansprüche, wobei die Kenngröße eine Steifigkeit der oder einer Komponente der Maschine (2) betrifft.

14. Verfahren nach einem der vorherigen Ansprüche, wobei die Kenngröße eine Positioniergenauigkeit, insbesondere eine Kreisformabweichung, der oder einer Komponente der Maschine (2) betrifft.

15. Verfahren nach einem der vorherigen Ansprüche, wobei die Kenngröße ein Umkehrspiel der oder einer Maschinenachse (X, Y, Z) der Maschine (2) betrifft.

16. Verfahren nach einem der vorherigen Ansprüche, wobei die Kenngröße eine Sensibilität eines von der Maschine (2) umfassten oder mit der Maschine (2) verbundenen Messsystems betrifft.

17. Verfahren nach einem der vorherigen Ansprüche, wobei mehrere unterschiedliche definierte Zustände definierbar sind und der Parameter aus der Gesamtheit dieser Zustände, insbesondere aus Bewegungsabläufen, bestimmbar ist.

18. Verfahren nach einem der vorherigen Ansprüche, wobei der definierte Zustand von einem Hersteller der numerischen Steuereinrichtung und/oder einem OEM und/oder einem Benutzer der numerischen Steuereinrichtung vorgebbar ist.

19. Numerische Steuereinrichtung (3) zur Durchführung eines Verfahrens nach einem der Ansprüche 1 bis 18, umfassend
- Mittel zum Definieren wenigstens eines definierten Zustandes, in dem sich eine Maschine (2) während einer Herstellung, Be- u/o Verarbeitung eines Werkstücks (16) mittels der Maschine (2) befinden kann;
- Mittel zum Festlegen wenigstens eines Steuerungs- und/oder Maschinendatums, das in dem definierten Zustand erfasst wird;
- Mittel zum Erkennen des definierten Zustandes während eines laufenden Betriebs der Maschine (2),
- Mittel zum Erfassen des festgelegten Steuerungs- u/o Maschinendatums in dem definierten Zustand,
- Mittel zum Bestimmen wenigstens einer Kenngröße der mit der numerischen Steuereinrichtung (3) verbundenen Maschine (2) in Abhängigkeit des erfassten Steuerungs- u/o Maschinendatums;
- Mittel zum Evaluieren der bestimmten Kenngröße
- Mittel zum Agieren in Abhängigkeit eines Ergebnisses der Auswertung.
